# EUROPÄISCHE PATENTANMELDUNG

(11) **EP 4 786 350 A1**
(43) Veröffentlichungstag der Anmeldung: **05.08.2026**
(21) Anmeldenummer: 25217964.3
(22) Anmeldetag: 24.11.2025
(51) Int. Cl.: B65C 9/00, B65C 9/02, B67C 3/22, G01N 21/90, B07C 5/34, B41J 3/407

(54) **MODUL FÜR EINE BEHÄLTERBEHANDLUNGSMASCHINE**

(30) Priorität: 31.01.2025 DE 102025103568
(71) Anmelder: Krones AG, 93073 Neutraubling (DE)
(72) Erfinder: Weigl, Franz, 93073 Neutraubling (DE); Gut, Thorsten, 93073 Neutraubling (DE); Schober, Stefan, 93073 Neutraubling (DE)
(74) Vertreter: Grünecker Patent- und Rechtsanwälte PartG mbB

(57) **Zusammenfassung**

Modul (100) für eine Behälterbehandlungsmaschine, das Modul umfassend einen Rahmen (103), eine Inspektionseinrichtung (101) für Behälter (130) und eine Ausleiteinrichtung (102) für Behälter stromab der Inspektionseinrichtung, wobei die Inspektionseinrichtung und die Ausleiteinrichtung in einer wohl definierten relativen Anordnung an dem Rahmen befestigt sind.

## Beschreibung

Die vorliegende Erfindung betrifft ein Modul für eine Behälterbehandlungsmaschine gemäß unabhängigem Anspruch 1.

### Stand der Technik

Behälterbehandlungsmaschinen sind aus dem Stand der Technik grundsätzlich bekannt. Behälterbehandlungsmaschinen umfassen üblicherweise eine Vielzahl von Komponenten und müssen zunächst beim Hersteller zusammengebaut und eingerichtet werden. Anschließend ist üblicherweise ein Transport zum Kunden erforderlich. Hierbei kann es notwendig sein, die bereits zusammengebauten Maschinen erneut auseinanderzunehmen, was nachteilig zu einem erneuten Einrichten beim Kunden führt, beziehungsweise dies erforderlich macht, um sicherzustellen, dass die Komponenten relativ zueinander zuverlässig angeordnet sind und ihre angedachte Funktion übernehmen können.

Aus der DE 10 2010 043 635 A1 ist eine Vorrichtung zum Inspizieren von Behältern oder dgl., insbesondere von Flaschen aus Glas oder Kunststoff, mit einem an einem Förderweg montierten Inspektionsmodul bekannt, wobei Vorrichtung als modular aufgebaute Inspektionseinheit mit einem Träger mit Aufnahmeplätzen für eine Mehrzahl von Inspektionsmodulen ausgebildet ist.

Aus der EP 1 449 778 A1 ist ein Inspektionsmodul mit verschiedenen Komponenten, insbesondere Sensorik bekannt.

Die US 6,525,333 B1 offenbart weiterhin ein System und Verfahren zur Inspektion eines Objekts mit einer ringförmigen Öffnung, wie etwa eines Behälters oder einer Dose, und verwendet eine Vielzahl von Kameras, die Graustufenbilder von bogenförmigen Sektoren aufnehmen, die zusammen einen kreisförmigen Bereich innerhalb der Öffnung bilden. Ein Prozessor ist mit der Vielzahl von Kameras verbunden, um die Graustufenbilder zu empfangen und Defekte innerhalb des Behälters anhand von Kontrastunterschieden und Graustufenintensität festzustellen. Dies ermöglicht eine intelligente Analyse von Defekten durch qualitative Inspektionen und quantitative Messungen bei höheren Geschwindigkeiten.

Gleichzeitig macht die grundsätzlich beliebige Anordenbarkeit weiterer Komponenten, wie beispielsweise Schaltschränken oder Transporteinrichtungen, eine platzsparende und zuverlässige Anordnung von Komponenten einer Behälterbehandlungsmaschine schwierig.

### Aufgabe

Ausgehend vom bekannten Stand der Technik besteht die zu lösende technische Aufgabe somit darin, ein Modul für eine Behälterbehandlungsmaschine anzugeben, mit dem der Aufwand zum Einrichten reduziert wird und gleichzeitig möglichst Platz eingespart wird.

### Lösung

Diese Aufgabe wird erfindungsgemäß durch das Modul für eine Behälterbehandlungsmaschine gemäß Anspruch 1 und die Behälterbehandlungsmaschine nach Anspruch 14 gelöst. Vorteilhafte Weiterbildungen der Erfindung sind in den Unteransprüchen erfasst.

Erfindungsgemäß ist ein Modul für eine Behälterbehandlungsmaschine vorgesehen, das Modul umfassend einen Rahmen, eine Inspektionseinrichtung für Behälter und eine Ausleiteinrichtung für Behälter stromab der Inspektionseinrichtung, wobei die Inspektionseinrichtung und die Ausleiteinrichtung in einer wohl definierten relativen Anordnung an dem Rahmen befestigt sind.

Der Rahmen kann einstückig oder mehrstückig (also mehrere Teile umfassend) ausgeführt sein. Unter der definierten Anordnung der Inspektionseinrichtung und der Ausleiteinrichtung ist im erfindungsgemäßen Sinne eine Anordnung der Inspektionseinrichtung und der Ausleiteinrichtung zu verstehen, die etwa bei einem Einrichten oder ersten Zusammenbauen des Moduls umfassend den Rahmen, die Inspektionseinrichtung und die Ausleiteinrichtung festgelegt wird, um die Funktionsfähigkeit des Moduls sicher zu stellen. Die wohldefinierte Anordnung ist also die Anordnung, bei der die Inspektionseinrichtung und die Ausleiteinrichtung am Rahmen so angeordnet sind, dass sie die angedachte Funktion möglichst fehlerfrei ausführen können.

Die Behälterbehandlungsmaschine kann insbesondere eine Behälterbehandlungsmaschine zum Behandeln von Dosen sein. Insoweit kann vorgesehen sein, dass die Inspektionseinrichtung zum Inspizieren von Dosen (insbesondere leeren Dosen) und die Ausleiteinrichtung zum Ausleiten dieser Dosen (insbesondere ebenfalls leeren Dosen) ausgebildet ist.

Die Erfindung ist jedoch hinsichtlich der Eignung oder Ausbildung der Inspektionseinrichtung und der Ausleiteinrichtung nicht beschränkt.

Vorteilhaft, wenn auch nicht zwingend, kann das Modul weiterhin eine am Rahmen angeordnete (insbesondere fest angeordnete) Medienversorgung umfassen, mit der ein Vakuumtransportband zum Transportieren von Behältern (das nicht fest an dem Rahmen verbaut sein muss) mit Vakuum beaufschlagt werden kann.

Mit diesem Modul ist der Aufwand für das Einrichten der Komponenten, also der Inspektionseinrichtung und der Ausleiteinrichtung reduziert, da ein erneutes Einrichten beim Kunden entfallen kann. Gleichzeitig kann durch die systematische Anordnung der Komponenten am Rahmen Platz eingespart werden.

Nach dem Ausleitelement kann eine Ausleitkontrolle stattfinden.

Es kann vorgesehen sein, dass die Inspektionseinrichtung und/oder die Ausleiteinrichtung fest oder lösbar an dem Rahmen befestigt sind.

Dies kann insbesondere dann von Vorteil sein, wenn das Modul für den nachträglichen Transport wieder in seine Bestandteile zerlegt werden muss, insbesondere die Inspektionseinrichtung und/oder die Ausleiteinrichtung von dem Rahmen gelöst werden müssen. Die wohldefinierte Anordnung kann dabei vermerkt werden, insbesondere durch Markierungen am Rahmen oder durch am Rahmen weiterhin befestigte Verbindungselemente wie Aufnahme- bzw. Zentrierdorne und Schraubverbindungen zum Befestigen der Inspektionseinrichtung und/oder der Ausleiteinrichtung vorgegeben sein, sodass bei einem erneuten Zusammenbauen dieselbe Ausrichtung ohne erneute vollständige Justage der relativen Position der Inspektionseinrichtung und der Ausleiteinrichtung erfolgen kann.

Bevorzugt sind sowohl die Inspektionseinrichtung als auch die Ausleiteinrichtung jedoch fest, insbesondere nicht zerstörungsfrei oder nicht Werkzeuglos lösbar an dem Rahmen angeordnet.

In einer Ausführungsform ist vorgesehen, dass der Rahmen Standelemente zum Aufstellen des Moduls umfasst. Es kann vorgesehen sein, dass die Standelemente eine Bodenfreiheit des Moduls von beispielsweise bis zu 500mm oder bis zu 400mm oder bis zu 300mm gewährleisten können.

In einer Ausführung kann vorgesehen sein, dass als Transportelement ein Vakuumtransporteur die Behälter an den Inspektionsmodulen vorbeiführt.

Die Standelemente können beispielsweise Füße (etwa mit einer rutsch- und reibfesten Oberfläche um die Standfestigkeit des Moduls am Boden einer Werkshalle zu verbessern) sein, sodass ein Aufstellen des Rahmens und damit des Moduls auf beispielsweise dem Boden einer Werkshalle möglich ist.

Die Standelemente können insbesondere so ausgebildet sein, dass eine Verstellung der Ausrichtung des Rahmens möglich ist, sodass dieser beispielsweise an einen nicht perfekt ebenen Untergrund angepasst werden kann, um einen zuverlässigen Stand des Moduls zu gewährleisten.

Der Rahmen kann eine Durchführungsöffnung zum Hindurchführen von Behältern von der Ausleiteinrichtung umfassen.

Durch diese Durchführungsöffnungen können Behälter beispielsweise durch die Ausleiteinrichtung hindurch befördert werden, um diese aus dem weiteren Transport auszuschließen. Das Ausleiten kann beispielsweise erfolgen, wenn die Inspektionseinrichtung feststellt, dass ein bestimmter Behälter fehlerhaft ist. Mit dieser Ausführungsform kann weiterer Platz eingespart und gleichzeitig ein zuverlässiges Ausleiten bewirkt werden.

Es kann vorgesehen sein, dass das Modul eine elektrische oder elektronische Komponente zur Steuerung der Inspektionseinrichtung und/oder der Ausleiteinrichtung umfasst. Die elektrische oder elektronische Komponente kann beispielsweise ein Schaltschrank mit Steuerungselektronik sein und/oder eine Stromzuführung für wenigstens die Inspektionseinrichtung und/oder die Ausleiteinrichtung umfassen. Beispielsweise kann für die Inspektionseinrichtung notwendige Auswertelektronik (beispielsweise umfassend eine etwaige Bildauswertung für von der Inspektionseinrichtung aufgenommene Bilder von Behältern) als elektronische Komponente beispielsweise auch in einem Schaltschrank vorgesehen sein. Ebenfalls in diesem Schaltschrank oder separat kann als elektronische Komponente Steuerungselektronik für die Ausleiteinrichtung umfassen. Die Steuerungselektronik kann beispielsweise ausgebildet sein, eine Nachverfolgung eines inspizierten Behälters (beispielsweise bei einem Transport des Behälters mittels eines Vakuumtransportbandes über entsprechende Informationen des Drehgebers) durchzuführen und die Ausleiteinrichtung (beispielsweise ein Ausleitorgan wie einen Pusher oder ein Antriebsmittel des Ausleitorgans) abhängig von der Position des Behälters und dessen Inspektionsergebnis zum Ausleiten anzusteuern. Hiermit wird das Modul weiter verkompaktifiziert, sodass die Vorteile der Erfindung erreicht werden.

Die elektrische oder elektronische Komponente können an einer wohl definierten Position am Rahmen befestigt sein. Hierdurch kann ein eventuell notwendiges nachträgliches Einrichten bei beispielsweise einem Abnehmer des Moduls verringert werden.

In einer Ausführungsform ist vorgesehen, dass der Rahmen ein Verbindungselement zum Verbinden des Rahmens mit einer anderen Komponente der Behälterbehandlungsmaschine umfasst. Mit dieser Ausführungsform können auch komplexere Behälterbehandlungsanlagen mit reduziertem Einrichtaufwand insbesondere bei einem Abnehmer der Anlage bereitgestellt werden.

Das Verbindungselement kann zum Einstellen einer relativen Anordnung des Moduls zu der Komponente ausgebildet sein.

Mit dieser Ausführungsform kann trotz vereinfachtem Einrichten etwaigen Abweichungen in der Beschaffenheit eines Bereichs zum Aufstellen des Moduls Rechnung getragen werden.

Die Abmessungen des Moduls können einen Transport des Moduls in einem ISO-Container ermöglichen.

Dies bedeutet insbesondere, dass das Modul in seinem zusammengebauten Zustand Abmessungen aufweist, die ein Einbringen des gesamten Moduls im zusammengebauten Zustand ohne Beschädigung in einen ISO-Container ermöglichen. Hierdurch wird der Einrichtaufwand bei einem Abnehmer des Moduls weiter reduziert, da das gesamte Modul als eine Einheit geliefert werden kann, was ein nochmaliges Einrichten beim Kunden vollständig oder zu einem großen Teil überflüssig machen kann.

Es kann vorgesehen sein, dass der Rahmen Transportaufnehmer zum Aufnehmen von Transportelementen einer Transporteinrichtung umfasst.

Die Transportaufnehmer können beispielsweise Öffnungen zum Aufnehmen beziehungsweise zum Einführen von Gabelstaplergreifern zw. -gabeln sein. In diesem Sinne ist die Transporteinrichtung eine Transporteinrichtung zum Transportieren des Moduls selbst. Hierdurch wird das Modul noch kompakter ausgebildet und ist gleichzeitig leicht zu transportieren.

In einer Ausführungsform ist vorgesehen, dass das Modul wenigstens eines von einer zweiten Inspektionseinrichtung, einer Transporteinrichtung zum Transportieren von Behältern und einer Markierungseinrichtung zum Markieren von Behältern in einer wohl definierten relativen Anordnung zur Inspektionseinrichtung und/oder zur Ausleiteinrichtung umfasst. Wie bereits beschrieben kann es sich bei den Behältern insbesondere um Dosen handeln, sodass die beschriebenen Einrichtungen insbesondere zur Wechselwirkung mit Dosen (Inspizieren, Ausleiten, Transportieren, Markieren) ausgebildet sein können.

Auch andere oder zusätzliche Einrichtungen sind denkbar. So kann insbesondere als zweite Inspektionseinrichtung (oder auch als Inspektionseinrichtung) eine Leerdoseninspektionseinrichtung zum Inspizieren leerer Dosen oder eines Teils der Dosen vorgesehen sein. Beispielsweise kann die Leerdoseninspektionseinrichtung zum Inspizieren eines Dosenflansches oder einer Doseninnenwand oder einer Dosenseitenwand oder einer Folie im oder am Boden der Dose ausgebildet sein. Bei der Seitenwandinspektion kann insbesondere auch ein Überprüfen von Aufdrucken (etwa Datierung oder Ländercode, Testdosenerkennung, Farberkennung, Matrixcode) oder dekorativen Elementen (aufgebrachten Druckbildern, Etiketten, etc.) umfasst sein.

Die Markierungseinrichtung kann insbesondere ausgebildet sein, eine Datumsangabe oder ähnliche mit der Herstellung des Behälters (insbesondere der Dose) assoziierte Information auf einen Teil der Oberfläche (etwa einen Teil der Seitenwand oder des Bodens) des Behälters aufzubringen. Die Markierungseinrichtung kann beispielsweise als Direktdruckkopf oder als Laser-Markiereinrichtung ausgeführt sein. Die Markierungseinrichtung kann weiterhin eine Kontrolleinrichtung zur Kontrolle der auf den Behälter aufgebrachten Markierung umfassen. Alternativ kann die Kontrolleinrichtung beispielsweise auch stromab der Markierungseinrichtung separat vorgesehen sein und ferner optional ausgebildet sein, wenigstens ein weiteres Merkmal des Behälters zusätzlich zu der Markierung zu kontrollieren. Beispielsweise kann die Kontrolleinrichtung auch als zweite Inspektionseinrichtung ausgeführt sein.

Als zweite Inspektionseinrichtung kann beispielsweise auch eine Einrichtung zum Bestimmen einer Eigenschaft einer Gleitbeschichtung des Behälters (insbesondere eine am Boden des Behälters aufgebrachte Gleitbeschichtung) umfassen.

Die Transporteinrichtung kann beispielsweise als Vakuumtransportband ausgeführt sein, bei dem die Behälter durch angelegten Unterdruck auf dem Transportband gehalten und so sicher transportiert werden können.

In einer Ausführungsform kann vorgesehen sein, dass jede der beschriebenen Einrichtungen zum Inspizieren/Kontrollieren wenigstens einer Eigenschaft des Behälters (also jede Inspektionseinrichtung und die Kontrolleinrichtung beispielsweise) am Modul stromauf der Ausleiteinrichtung angeordnet ist.

Die zusätzlichen beschriebenen Einrichtungen können an dem Rahmen (an dem die Inspektionseinrichtung und die Ausleiteinrichtung beispielsweise fest, insbesondere nicht werkzeuglos lösbar angeordnet sein können) beispielsweise lösbar über Aufnahme- oder Zentrierdorne, Schraubverbindungen und/oder Bajonettverbindungen angeordnet sein, sodass sie, falls nötig, optional angebaut oder demontiert werden können.

Die Vorteile der Kompaktifizierung können hiermit auf weitere Einrichtungen angewandt werden.

Die Inspektionseinrichtung kann zwei Inspektionselemente zum Inspizieren von Behältern umfassen und die zwei Inspektionselemente können an einer gemeinsamen Aufnahme der Inspektionseinrichtung angeordnet sind.

Mit dieser Ausführungsform wird die Inspektionseinrichtung selbst weiter verkompaktifiziert, da unterschiedliche Inspektionsaufgaben im Wesentlichen am selben Ort ausgeführt werden können, was den notwendigen Transportweg eines Behälters durch die Inspektionseinrichtung reduziert.

Es kann vorgesehen sein, dass die Inspektionselemente so ausgebildet und an der gemeinsamen Aufnahme angeordnet sind, dass die Inspektionselemente einen Behälter aus verschiedenen Richtungen inspizieren können.

Die verschiedenen Richtungen können insbesondere in einer Ebene oder in zueinander in transportrichtung beabstandeten Ebenen senkrecht zu einer Transportrichtung der Behälter durch die Inspektionseinrichtung im Bereich der Inspektionselemente liegen.

Es kann vorgesehen sein, dass die verschiedenen Richtungen einen Winkel von 75° bis 105° miteinander einschließen. Bevorzugt kann der Winkel auch etwa 90° betragen. Durch diese Ausgestaltung kann eine möglichst vollständige Inspektion der Behälter bewirkt werden.

Erfindungsgemäß ist weiterhin eine Behälterbehandlungsmaschine zum Behandeln von Behältern, wie Flaschen, Dosen oder dergleichen, vorgesehen, die Behälterbehandlungsmaschine umfassend ein Modul nach einer der vorangegangenen Ausführungsformen. Es kann in diesem Zusammenhang vorgesehen sein, dass das Modul selbst die Behälterbehandlungsmaschine bildet oder stromauf oder stromab (gesehen in Transportrichtung der Behälter durch die Behälterbehandlungsmaschine) weiterer Behandlungsmodule (beispielsweise auch ein weiteres Modul entsprechend der vorangegangenen Ausführungsformen) zum Behandeln der Behälter angeordnet ist. Die Behälterbehandlung ist erfindungsgemäß nicht beschränkt, kann aber beispielsweise ein Füllen, Verschließen, Etikettieren, Bedrucken, Inspizieren oder ähnliches umfassen.

Es kann vorgesehen sein, dass die Behälterbehandlungsmaschine eine Inspektionsmaschine oder eine modulare Leerdoseninspektionsmaschine ist. Die Verwendung eines Moduls gemäß einer der beschriebenen Ausführungsformen ist in solchen Maschinen besonders vorteilhaft.

### Kurze Beschreibung der Figuren

- Figur 1: zeigt eine Ausführungsform eines Moduls,
- Figur 2: zeigt eine Ausführungsform einer gemeinsamen Aufnahme und von Inspektionselementen.

### Ausführliche Beschreibung

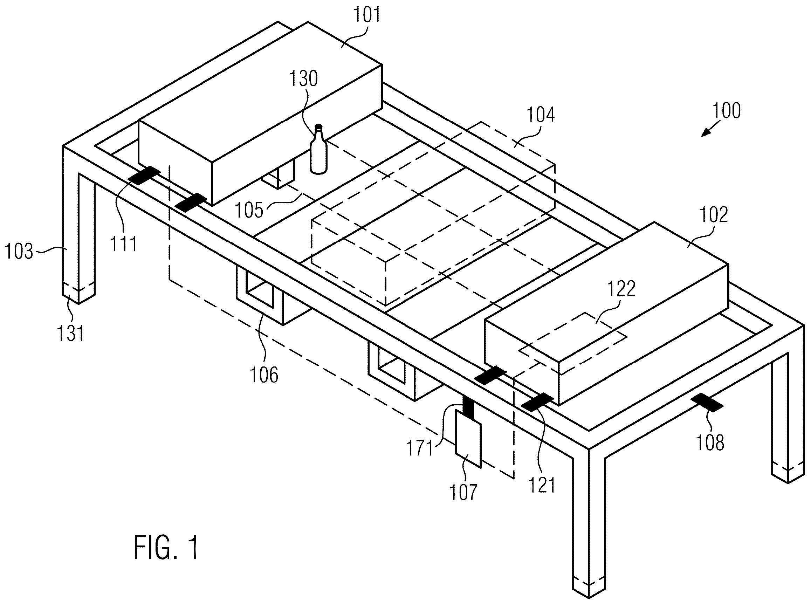

Figur 1 zeigt eine Ausführungsform eines Moduls 100 für eine Behälterbehandlungsmaschine. Unter dem Begriff des Moduls ist insbesondere ein Teil einer Behälterbehandlungsmaschine zu verstehen, der in einigen Ausführungsformen nicht die gesamte Behälterbehandlungsmaschine bildet, sondern entweder ausschließlich oder wenigstens die im folgenden beschriebenen Komponenten umfasst.

Das Modul 100 umfasst einen Rahmen 103. Dieser Rahmen kann einstückig oder auch mehrstückig ausgebildet sein. Bei mehrstückiger Ausbildung kann er beispielsweise aus einer Vielzahl von miteinander über Schraubverbindungen, Steckverbindungen, Klickverbindungen oder ähnlichen zusammengesetzten Rohren, wie beispielsweise Metallrohren, gebildet sein. Ist der Rahmen 103 einstückig ausgebildet, so kann zumindest eine tragende Struktur beispielsweise aus miteinander fest verbundenen, insbesondere nicht lösbar verbundenen Elementen, wie beispielsweise verschweißten Rohren, gebildet sein oder diese umfassen.

Das Material des Rahmens 103 ist im Sinne der Erfindung nicht beschränkt. Unabhängig davon, ob der Rahmen einstückig oder mehrteilig ausgebildet ist, kann der Rahmen weitere Elemente umfassen. Diese können lösbar mit der einstückigen oder mehrteiligen Struktur des Rahmens verbunden sein, indem sie beispielsweise mit dieser verschraubt oder in diese eingeklickt werden.

Das Modul 100 umfasst weiterhin wenigstens eine Inspektionseinrichtung 101 sowie eine Ausleiteinrichtung 102.

Die Inspektionseinrichtung 101 ist ausgebildet, um Behälter, wie beispielsweise Dosen, Flaschen oder dergleichen, zu inspizieren. Die Inspektionseinrichtung kann beispielsweise eine oder mehrere beispielsweise in Transportrichtung nacheinander angeordnete Kameras oder sonstige Sensoren umfassen, die zum Inspizieren der Behälter als Ganzes oder zumindest eines Teils der Behälter ausgebildet sind. Weitere Einrichtungen, wie beispielsweise geeignete Optiken, um Licht von einer Lichtquelle in Richtung der Behälter beispielsweise als diffuse Beleuchtung zu emittieren, können als Teil der Inspektionseinrichtung vorgesehen sein. Insoweit kann die Inspektionseinrichtung hinsichtlich ihrer funktionalen Ausgestaltung zum Inspizieren von Behältern auf grundsätzlich beliebige und bekannte Art ausgebildet sein.

Die Ausleiteinrichtung 102 ist bevorzugt stromab der Inspektionseinrichtung 101 angeordnet, soweit die Inspektionseinrichtung und die Ausleiteinrichtung derart miteinander wechselwirken, dass von der Inspektionseinrichtung hinsichtlich irgendeines bestimmten Merkmals der Behälter identifizierte Eigenschaften (wie beispielsweise eines Defektes, einer Verunreinigung oder ähnlichem) die Ausleiteinrichtung gezielt gesteuert wird, um diese Behälter auszuleiten.

Erfindungsgemäß ist dabei vorgesehen, dass die Inspektionseinrichtung und die Ausleiteinrichtung an dem Rahmen in einer wohldefinierten Position bzw. in einer wohl definierten relativen Anordnung (die bestimmt ist durch die jeweiligen wohl definierten Positionen) zueinander angeordnet sind. Eine wohldefinierte Position ist dabei eine Position, die die Ausleiteinrichtung und die Inspektionseinrichtung einnehmen, nachdem das Modul, beispielsweise beim Hersteller, fertig eingerichtet wurde, also insbesondere die relative Anordnung der Ausleiteinrichtung und der Inspektionseinrichtung auf dem Rahmen so angepasst wurde, dass diese zusammen die angedachte Funktion möglichst fehlerfrei ausführen können. Die dann von der Inspektionseinrichtung und der Ausleiteinrichtung eingenommene Position definiert eine relative Anordnung der Inspektionseinrichtung und der Ausleiteinrichtung zueinander beziehungsweise zum Rahmen und soll im Folgenden als die wohldefinierte relative Anordnung an dem Rahmen angesehen werden.

Das Befestigen der Inspektionseinrichtung und der Ausleiteinrichtung kann beispielsweise ein Verschrauben oder ein Klemmen der Inspektionseinrichtung und der Ausleiteinrichtung an dem Rahmen oder an Teilen des Rahmens umfassen. Beispielsweise kann die Inspektionseinrichtung 101 über geeignete Verbindungselemente 111 mit dem Rahmen fest, aber optional lösbar verbunden sein. Bei den Verbindungselementen kann es sich beispielsweise um korrespondierende Verbindungselemente am Rahmen und der Inspektionseinrichtung handeln, wie beispielsweise Langlöcher am Rahmen oder eines Teils des Rahmens und Schrauben, die beispielsweise durch mit der Inspektionseinrichtung und/oder der Ausleiteinrichtung verbundene Löcher geführt werden können, um in die Langlöcher im Rahmen eingebracht und in diesen befestigt oder fixiert zu werden.

Auch andere Möglichkeiten, wie beispielsweise ein Klemmen der Inspektionseinrichtung und der Ausleiteinrichtung, sind denkbar, wobei die Mittel zum Befestigen der Inspektionseinrichtung und der Ausleiteinrichtung in der wohldefinierten relativen Anordnung für die Inspektionseinrichtung und die Ausleiteinrichtung nicht identisch sein müssen. Beispielsweise kann vorgesehen sein, dass die Ausleiteinrichtung über eine erste Art der lösbaren oder nicht lösbaren Verbindung mit dem Rahmen befestigt, beziehungsweise verbunden ist und die Inspektionseinrichtung über eine zweite Art an dem Rahmen befestigt ist, wobei die erste Art und die zweite Art sich unterscheiden. Insbesondere kann vorgesehen sein, dass die Ausleiteinrichtung fest beziehungsweise nicht ohne Beschädigung lösbar mit dem Rahmen verbunden ist und die Inspektionseinrichtung lösbar mit dem Rahmen verbunden ist, ohne dass diese beim Lösen der Verbindung von dem Rahmen beschädigt werden muss. Auch die Umkehrung ist denkbar.

Der Rahmen kann, wie in der hier gezeigten Ausführungsform, wenigstens eines, bevorzugt eine Vielzahl von Standelementen 131 umfassen. Die Standelemente können beispielsweise als Füße oder als Teile von Füßen des Rahmens ausgebildet sein. Insbesondere können die Standelemente so ausgeführt sein, dass sie in ihrer Höhe beziehungsweise Länge verstellbar sind, sodass die Anordnung des Rahmens und somit des gesamten Moduls 100 einstellbar ist. Hiermit wird erreicht, dass beispielsweise auch bei einer unebenen Werkshalle das Modul so positioniert werden kann, dass die Inspektionseinrichtung und die Ausleiteinrichtung bevorzugt in Waage sind.

Die Standelemente können dabei stufenlos (beispielsweise in Form einer Spindel) verstellbar ausgebildet sein oder in mehreren Stufen bevorzugt unabhängig voneinander eingestellt werden.

Das Modul kann weiterhin eine elektrische und/oder elektronische Komponente 107 umfassen, die zur Steuerung der Inspektionseinrichtung und/oder der Ausleiteinrichtung vorgesehen ist. Bei der elektrischen oder elektronischen Komponente kann es sich beispielsweise um einen Schaltschrank oder lediglich um eine Steuereinheit, wie beispielsweise einen Computer umfassend einen zugeordneten Prozessor und Speicher, handeln, die ausgebildet sind, um wenigstens eine Funktion der Inspektionseinrichtung und/oder der Ausleiteinrichtung zu steuern. Alternativ oder zusätzlich kann die elektrische oder elektronische Komponente eine Stromversorgung für die Inspektionseinrichtung und/oder die Ausleiteinrichtung bilden oder diese umfassen.

Es kann auch vorgesehen sein, dass das Modul eine Vielzahl elektrischer und/oder elektronischer Komponenten umfasst. Wenigstens eine dieser Vielzahl von elektrischen und/oder elektronischen Komponenten kann der Inspektionseinrichtung zugeordnet sein und wenigstens eine andere elektrische und/oder elektronische Komponente kann der Ausleiteinrichtung zugeordnet sein, sodass eine Steuerung der Funktion der Inspektionseinrichtung durch die eine elektrische und/oder elektronische Komponente zumindest teilweise bewirkt wird und die Steuerung der Ausleiteinrichtung durch die wenigstens eine andere elektrische und/oder elektronische Komponente bewirkt wird. Analog zu den vorher beschriebenen Ausführungsformen ist das Anordnen der elektrischen oder elektronischen Komponente in einer wohl definierten relativen Anordnung am Rahmen so zu verstehen, dass nach Einrichten des Moduls diese Komponente eine bestimmte Position einnimmt, in der sie auch im weiteren normalen Betrieb des Moduls angeordnet wäre.

Zur Befestigung der elektrischen und/oder elektronischen Komponente kann ein geeignetes Verbindungselement 171 vorgesehen sein, das analog zu den bisher beschriebenen Ausführungsformen ausgestaltet sein kann. Dabei kann vorgesehen sein, dass nur bestimmte Positionen für die elektrische und/oder elektronische Komponente beziehungsweise die elektrischen und/oder elektronischen Komponenten an dem Rahmen vorgesehen sind und eine anderweitige Befestigung dieser Komponenten am Rahmen nicht möglich ist. Dabei kann vorgesehen sein, dass die vorgesehenen Positionen solche sind, die eine grundsätzlich freie Anordnung der Inspektionseinrichtung und/oder der Ausleiteinrichtung ermöglichen, ohne dass die elektrische und/oder elektronische Komponente beziehungsweise Komponenten diese behindern. Es kann vorgesehen sein, dass die elektrische und/oder elektronische Komponente so am Rahmen angeordnet ist, dass sie beispielsweise vor Verschmutzung durch spritzende Medien zumindest teilweise geschützt ist, indem sie beispielsweise an einer Unterseite des Rahmens angeordnet wird.

Der Rahmen kann alternativ oder zusätzlich auch ein oder mehrere Verbindungselemente 108 zum Verbinden des Rahmens mit einer anderen Komponente der Behälterbehandlungsmaschine umfassen. Insbesondere kann vorgesehen sein, dass mit dem Verbindungselement eine Verbindung zu einem anderen Rahmen, beispielsweise ebenfalls umfassend eine Inspektionseinrichtung und eine Ausleiteinrichtung entsprechend der vorangegangen beschriebenen Ausführungsformen, hergestellt werden kann. Das Verbindungselement kann vorteilhaft so ausgestaltet sein, dass die Verbindung mit der anderen Komponente der Behälterbehandlungsmaschine lösbar ist, sodass diese beispielsweise zum Zwecke des Transports der gesamten Behälterbehandlungsmaschine nach einer anfänglichen Einrichtung der gesamten Behälterbehandlungsmaschine gelöst werden kann und die Module einzeln beispielsweise zum Kunden befördert werden können.

Alternativ oder zusätzlich kann der Rahmen auch einen oder mehrere Transportaufnehmer 106 umfassen, die so ausgebildet sind, dass sie Transportelemente einer Transporteinrichtung aufnehmen können. Bei der Transporteinrichtung handelt es sich um eine Transporteinrichtung handeln, die den Rahmen insgesamt, bevorzugt das gesamte Modul, transportieren kann. Die Transporteinrichtung kann beispielsweise ein Stapler sein und die Transportaufnehmer können Aufnahmeöffnungen oder Aufnahmebereiche sein, durch die die Gabel des Gabelstaplers geführt werden kann. Auch andere Ausführungsformen sind denkbar und insoweit sind die Transportaufnehmer nur dahingehend beschränkt, dass sie mit einer geeigneten Transporteinrichtung wechselwirken können. Die gesamte Struktur der Transportaufnehmer und ihre Befestigung beispielsweise am Rahmen kann bevorzugt so ausgebildet sein, dass sie das gesamte Gewicht des Moduls tragen können. Sie können lösbar mit dem Rahmen verbunden sein oder mit diesem auch nicht lösbar verbunden sein, beispielsweise mit diesem verschweißt sein.

Um die Größe (also insbesondere die räumlichen Abmessungen des Moduls) des Moduls möglichst gering zu erhalten und damit eine große Flexibilität bei der Anordnung verschiedener Komponenten der Behälterbehandlungsmaschine zu gewährleisten, kann vorgesehen sein, dass das Modul ausschließlich die Inspektionseinrichtung 101 und die Ausleiteinrichtung 102 umfasst. Es kann jedoch auch vorgesehen sein, dass das Modul 101 wenigstens eine weitere Einrichtung 104, insbesondere eine weitere Inspektionseinrichtung und/oder eine weitere Ausleiteinrichtung und/oder eine Markierungseinrichtung zum Markieren von Behältern, die die Inspektionseinrichtungen passiert haben oder die die Ausleiteinrichtung 102 passiert haben, umfasst. Bei der Markierungseinrichtung kann es sich beispielsweise um eine Druckeinrichtung handeln, insbesondere um eine Direktdruckeinrichtung, die eine Markierung auf die äußere Oberfläche des Behälters aufbringen kann.

Alternativ oder zusätzlich kann das Modul 100 auch eine Transporteinrichtung zum Transportieren von Behältern, beispielsweise von der Inspektionseinrichtung 101 zur Ausleiteinrichtung 102, umfassen. Sämtliche dieser Einrichtungen sind in bevorzugten Ausführungsformen in einer wohl definierten Anordnung am Rahmen befestigt, wobei der Begriff der wohl definierten Anordnung entsprechend der vorangegangenen Ausführungsformen zu verstehen ist.

In einer weiteren Ausführungsform kann vorgesehen sein, dass der Rahmen eine Durchführungsöffnung 122 zum Hindurchführen von Behältern aus der Ausleiteinrichtung 102 umfasst. Die Durchführungsöffnung 122 kann an einer vorgegebenen Position am beziehungsweise im Rahmen angeordnet sein. Zwar kann eine Justage der Position der Ausleiteinrichtung 102 relativ zur Position dieser Durchführungsöffnung 122 beim Einrichten des Moduls erforderlich sein, diese ist jedoch in diesen Ausführungsformen bevorzugt so gering (beispielsweise wenige Millimeter oder wenige Zentimeter entlang wenigstens einer Richtung), dass die Ausleiteinrichtung ausgeleitete Behälter in jedem Fall der Durchführungsöffnung zuführen kann. Es kann zusätzlich vorgesehen sein, dass im Bereich der Durchführungsöffnung 122 eine Aufnahme für ausgeleitete Behälter angeordnet werden kann, insbesondere mit dem Rahmen 103 verbunden werden kann. Ausgeleitete Behälter können aus der Ausleiteinrichtung dann durch die Durchführungsöffnung 122 der Aufnahme zugeführt werden, in der sie dann gelagert werden können.

Insgesamt können die Abmessungen des Moduls umfassend alle Komponenten und Bestandteile die in den bisherigen Ausführungsformen diskutiert wurden so bemessen sein, dass das Modul im vollständig zusammengebauten Zustand Abmessungen aufweist (Länge, Höhe und Breite) die ein oder höchstens gleich den Abmessungen eines Standard ISO-Containers sind, sodass das Modul in einem Standard ISO-Container untergebracht und so in zusammengebautem Zustand beispielsweise vom Hersteller zum Kunden transportiert werden kann.

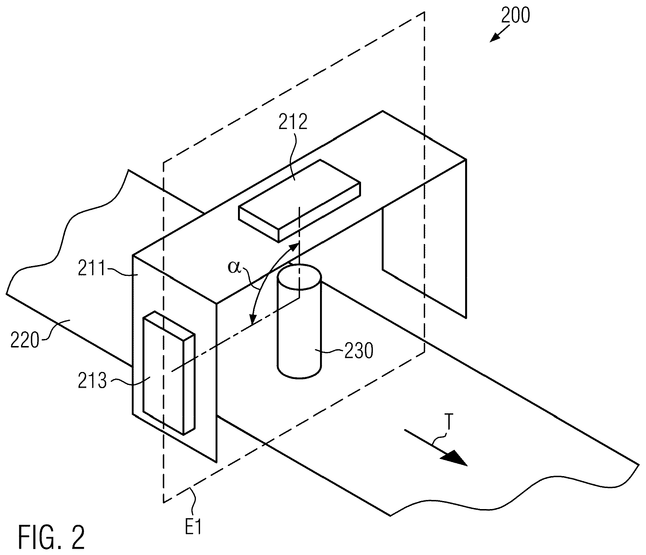

Figur 2 zeigt eine schematische Darstellung eines Teils einer Inspektionseinrichtung, wie sie in Kombination mit allen Ausführungsformen der Figur 1 eingesetzt werden kann. Die Inspektionseinrichtung 200 ist hier dargestellt in Relation zu einer Transporteinrichtung 220, die Behälter 230 entlang einer Transportrichtung T transportieren kann. Die Behälter 230 können beispielsweise Dosen, Flaschen oder dergleichen sein.

Die Inspektionseinrichtung umfasst in der hier gezeigten Ausführungsform wenigstens zwei Inspektionselemente 212 und 213. Diese sind zum Inspizieren wenigstens eines Teils der Behälter 230 ausgebildet. Beispielsweise kann es sich bei den Inspektionselementen 212 und 213 um Kameras handeln.

In den in Figur 2 gezeigten Ausführungsformen sind die Inspektionselemente 212 und 213 an einer gemeinsamen Aufnahme angeordnet, sodass die Inspektionselemente den Behälter 230 aus verschiedenen Richtungen, die miteinander einen Winkel α einschließen, inspizieren können. Die Richtungen können beispielsweise mit den optischen Achsen der Optik einer Kamera als Inspektionselement zusammenfallen oder grundsätzlich angeben, aus welcher Richtung die Inspektionselemente 212 und 213 den Behälter inspizieren können.

Die Richtungen können grundsätzlich beliebig im Raum angeordnet sein. Bevorzugt können jedoch Ausführungsformen sein, bei denen die Richtungen in einer gemeinsamen Ebene E1 liegen, beziehungsweise eine Ebene E1 definieren, die senkrecht auf einer Transportrichtung T der Behälter in der Transporteinrichtung 220 stehen kann. Um zu gewährleisten, dass eine möglichst vollständige Inspektion des Behälters durch eine möglichst geringe Anzahl von Inspektionselementen möglich ist, kann vorgesehen sein, dass die verschiedenen Richtungen einen Winkel α zwischen 75° bis 105° miteinander einschließen, insbesondere einen Winkel von 90° miteinander einschließen.

Hierdurch kann die notwendige Erstreckung der Inspektionseinrichtung in Transportrichtung T reduziert werden, da eine Inspektion der Behälter aus unterschiedlichen Richtungen an derselben Stelle, gesehen in Transportrichtung T der Behälter, ermöglicht wird. Die Aufnahme 211 kann beispielsweise als Rahmen ausgestaltet sein oder einen Rahmen umfassen, an dem über geeignete Verbindungselemente, wie Verschraubungen oder Verklemmungen, die Inspektionselemente lösbar befestigt werden können. Anstelle der hier dargestellten zwei Inspektionselemente können auch mehr Inspektionselemente zum Inspizieren der Behälter an einer Aufnahme 211 angeordnet sein. Alternativ kann auch vorgesehen sein, dass die Inspektionseinrichtung 200 wenigstens zwei Aufnahmen umfasst, die jeweils wenigstens zwei Inspektionselemente entsprechend der beschriebenen Ausführungsformen umfassen, wobei die Richtung, aus der wenigstens ein Inspektionselement einer ersten Aufnahme die Behälter inspiziert, von allen Richtungen, aus denen die Inspektionselemente einer zweiten Aufnahme die Behälter inspizieren, verschieden ist. Hierdurch wird eine doppelte Inspektion bestimmter Bereiche der Behälter (oder zumindest die Inspektion der Behälter mehrmals aus derselben Richtung) vermieden, womit die Zahl der Inspektionselemente weiter reduziert und damit auch der Platzbedarf der Inspektionseinrichtung verringert werden kann.

## Patentansprüche

1. Modul für eine Behälterbehandlungsmaschine, das Modul umfassend einen Rahmen, eine Inspektionseinrichtung für Behälter und eine Ausleiteinrichtung für Behälter stromab der Inspektionseinrichtung, wobei die Inspektionseinrichtung und die Ausleiteinrichtung in einer wohl definierten relativen Anordnung an dem Rahmen befestigt sind.

2. Modul nach Anspruch 1, wobei die Inspektionseinrichtung und/oder die Ausleiteinrichtung fest oder lösbar an dem Rahmen befestigt sind.

3. Modul nach Anspruch 1 oder 2, wobei der Rahmen Standelemente zum Aufstellen des Moduls umfasst.

4. Modul nach einem der Ansprüche 1 bis 3, wobei der Rahmen eine Durchführungsöffnung zum Hindurchführen von Behältern von der Ausleiteinrichtung umfasst.

5. Modul nach einem der Ansprüche 1 bis 5, wobei das Modul eine elektrische oder elektronische Komponente zur Steuerung der Inspektionseinrichtung und/oder der Ausleiteinrichtung umfasst.

6. Modul nach Anspruch 5, wobei die elektrische oder elektronische Komponente an einer wohl definierten Position am Rahmen befestigt ist.

7. Modul nach einem der Ansprüche 1 bis 6, wobei der Rahmen ein Verbindungselement zum Verbinden des Rahmens mit einer anderen Komponente der Behälterbehandlungsmaschine umfasst.

8. Modul nach Anspruch 7, wobei das Verbindungselement zum Einstellen einer relativen Anordnung des Moduls zu der Komponente ausgebildet ist.

9. Modul nach einem der Ansprüche 1 bis 8, wobei die Abmessungen des Moduls einen Transport des Moduls in einem ISO-Container ermöglichen.

10. Modul nach einem der Ansprüche 1 bis 9, wobei der Rahmen Transportaufnehmer zum Aufnehmen von Transportelementen einer Transporteinrichtung umfasst.

11. Modul nach einem der Ansprüche 1 bis 10, wobei das Modul wenigstens eines von einer zweiten Inspektionseinrichtung, einer Transporteinrichtung zum Transportieren von Behältern und einer Markierungseinrichtung zum Markieren von Behältern in einer wohl definierten relativen Anordnung zur Inspektionseinrichtung und/oder zur Ausleiteinrichtung umfasst.

12. Modul nach Anspruch 11, wobei die Inspektionseinrichtung zwei Inspektionselemente zum Inspizieren von Behältern umfasst und wobei die zwei Inspektionselemente an einer gemeinsamen Aufnahme der Inspektionseinrichtung angeordnet sind.

13. Modul nach Anspruch 12, wobei die Inspektionselemente so ausgebildet und an der gemeinsamen Aufnahme angeordnet sind, dass die Inspektionselemente einen Behälter aus verschiedenen Richtungen inspizieren können, wobei optional die verschiedenen Richtungen einen Winkel von 75° bis 105° miteinander einschließen.

14. Behälterbehandlungsmaschine zum Behandeln von Behältern, wie Flaschen, Dosen oder dergleichen, die Behälterbehandlungsmaschine umfassend ein Modul nach einem der Ansprüche 1 bis 13.

15. Behälterbehandlungsmaschine nach Anspruch 14, wobei die Behälterbehandlungsmaschine eine Inspektionsmaschine oder eine modulare Leerdoseninspektionsmaschine ist.
